# EUROPEAN PATENT SPECIFICATION

(11) **EP 2 210 738 B1**
(45) Date of publication and mention of the grant of the patent: **27.06.2012**
(21) Application number: 09250169.1
(22) Date of filing: 22.01.2009
(51) Int. Cl.: B32B 37/18, B32B 41/00

(54) **Pouch laminator and method of lamination**
Beutellaminiermaschine und Laminierverfahren
Poste de laminage de sacs et procédé de stratification

(43) Date of publication of application: 28.07.2010
(73) Proprietor: Tiko Corporation Limited, Chai Wan (HK)
(72) Inventor: Chan, Andy Wah Yiu, Chai Wan (HK)
(74) Representative: Hall, Graeme Keith

(56) References cited:
- EP-A- 1 426 729
- WO-A-2008/086198
- JP-A- 2001 171 004

## Description

### Technical field

The present invention relates to a laminator and method of lamination for use with pouches, particularly thermal lamination pouches.

### Background of the Invention

Laminators are commonly used to bond an outer layer of film to a sheet of material to form a laminate. It provides useful protection for items such as identification cards, certificates, photographs, menus or the like. Exemplary laminators are described in Japanese patent publication number 2001171004 and in International Publication Number WO 2008/086198 A1. The film is typically provided in the form of a pouch into which the sheet material may be placed prior to insertion into a laminator. Thermal lamination pouches include two films of polymer joined together by a heat seal along at least one edge, with the opposing inner sides of the films covered in a thin adhesive resin coating. During the lamination process, the adhesive resin is cured using heat while the opposing sides of the pouch are pressed together, so that after cooling a permanent bond is produced between each film and the sheet item. Depending upon the duty required a range of film thicknesses are used, generally from 80 to 250 micron, but which can range from 60 up to 350 micron.

In a known machine, the speed of travel of the laminating pouch through a thermostatically-controlled heating chamber is regulated and so as to control the heat applied to the section of the sheet material and films in the heating chamber. An important factor determining the throughput speed is the thickness of the films comprising the laminating pouch. A manually operated switch is provided for the user to select the proper thickness of the films and an associated starting throughput speed is determined accordingly. The sheet and films to be laminated pass through the heating chamber and a thickness sensor measures the total thickness of the films and the sheet material they enclose, making compensation for the heat "lost" to the sheet material and varying the throughput speed from the starting speed proportionally. In this manner this machine performs well over a broad range of sheet thicknesses, from paper to card and with films in the 60 to 350 micron range.

Before lamination the adhesive resin coating gives the film a high degree of opacity, scattering the light passing through it. This haze or degree of opacity is substantially reduced following proper curing and lamination whereby the film achieves a high light transmissivity. Inadequate heat can be applied during lamination as a result of incorrectly selecting a film thickness lower than that of the film being used and this can therefore produce a defective lamination in which the adhesive layer retains some haze or opacity readily visible to the unaided eye. On the other hand, excessive heat may allow the lamination to be wrinkled and deformed or, by excessively softening the pouch, the sheets can tend to curl and thereby become more readily caught in the rollers and jam the machine. Proper selection of the film thickness before operation of the machine is therefore very important with these prior art laminators.

Another factor which can influence the quality of the laminate or possibly cause jamming is the manner in which the laminate is fed into the laminator. Experienced users know that the sealed edge of the pouch should be fed into the machine first. However, this requirement may easily be overlooked, and this can result in air entrapment or misalignment of the films, producing bubbles or wrinkling of the laminate. A jam can occur if a pouch becomes adhered to one of the rollers as a result of misalignment between the films of the pouch.

In most instances the severity of a jam and the degree of damage to both the laminate and the laminator can be reduced by careful monitoring of the machine's operation. However, many users leave the laminator unattended during lamination and thus in some cases otherwise avoidable problems can result in a pouch becoming stuck firmly inside the machine. Jams within laminators can be difficult to rectify, since even if the laminating pouch can be readily removed, residual adhesive may nevertheless still be difficult to remove from the rollers and other components within the laminator.

It is an object of the present invention to overcome or substantially ameliorate the above disadvantages or more generally to provide an improved laminator and method of lamination.

### Disclosure of the Invention

According to one aspect of the present invention there is provided a laminator comprising:
a pouch feeding device for moving a substantially flat lamination pouch along a pouch-conveying path from an inlet toward an outlet, the pouch having a leading edge;
an optical transmissivity measuring apparatus comprising a light emitter and a light receiver providing a response signal proportional to the amount of light received from the light emitter through the pouch-conveying path at the inlet;
a control circuit for discriminating between a high and low optical transmissivity of the leading edge according to the response signal of the light receiver, the control circuit being operable to actuate the pouch feeding device to feed the pouch toward the outlet conditionally upon a high optical transmissivity of the leading edge and to stop the pouch feeding device or to actuate the pouch feeding device to return the pouch toward the inlet conditionally upon a low optical transmissivity of the leading edge.

Preferably the laminator further comprises a pouch detector disposed at the inlet, the pouch detector providing an actuation signal upon detection of the entry of a leading edge of the pouch into the inlet.

Preferably the pouch detector comprises a contact-type sensor actuated by engagement with the pouch when the pouch is inserted into the inlet. Optionally, the pouch detector may comprise an optical sensor.

Preferably the pouch detector comprises a pivoting arm, a roller mounted to the arm, resilient means for urging the roller into abutment with a stop surface and a transducer for providing the actuation signal, such that the actuating signal is proportional to the displacement of the roller from the stop surface.

Preferably the laminator further comprises an alarm operated by the control circuit conditionally upon a low optical transmissivity of the leading edge.

In another aspect the invention provides a method of operating a laminator having a pouch feeding device for moving a substantially flat lamination pouch along a pouch-conveying path from an inlet toward an outlet; a pouch detector disposed at the inlet for detection of the entry of a leading edge of the pouch into the inlet; an optical transmissivity measuring apparatus comprising a light emitter and a light receiver disposed proximate the inlet; and a control circuit for controlling the pouch feeding device in response to output from the pouch detector and the optical transmissivity measuring apparatus, the method comprising:
receiving an actuation signal from the pouch detector upon detection of the entry of a leading edge of the pouch into the inlet;
conditionally upon receipt of the actuation signal, operating the light emitter to transmit a beam along an optical path passing through the leading edge of the pouch;
receiving, from the light receiver, a response signal proportional to the amount of light received from the light emitter along the optical path, and
comparing the response signal to a predetermined optical transmissivity figure to discriminate between a high and low optical transmissivity of the leading edge and either:
if the comparing step indicates a high optical transmissivity of the leading edge then actuating the pouch feeding device to feed the pouch toward the outlet, or
if the comparing step indicates a low optical transmissivity of the leading edge then stopping the pouch feeding device or to actuating the pouch feeding device to return the pouch toward the inlet.

Advantageous embodiments of the invention are defined in the dependent claims.

This invention provides a laminator which is effective and efficient in operational use, and which offers improved performance in a number of respects. In particular the invention provides advantages with respect to jam avoidance or mitigation, but also in respect of manufacturing and operating costs, as will be apparent in view of the following description.

### Brief Description of the Drawings

Preferred forms of the present invention will now be described by way of example with reference to the accompanying drawings, wherein:
Figure 1 is a side elevation of a pouch detector of the laminator of the present invention;
Figure 2 is a section in an upright plane through the inlet sensor of Fig. 1;
Figure 3 is an enlarged view of detail A of Fig. 2;
Figure 4 is an exploded pictorial view of the components of the inlet sensor of Fig. 1;
Figure 5 is a section in an upright plane through a laminator of the present invention;
Figure 6 is a schematic of the control system for the laminator of Fig. 5;
Figure 7 is a graph indicating the variation of the voltage response signal of the phototransistor with the light transmissivity of the leading edge of a pouch;
Figure 8 is a cross-sectional view of a laminating pouch;
Figure 9 is a table showing the variation of pouch throughput speed with pouch thickness and sheet material thickness;
Figure 10 is a partially cut-away pictorial view of component parts the laminator of Fig. 5;
Figure 11 is a transverse section through the principal components of the heating chamber of the laminator of Fig. 5;
Figure 12 is a perspective view of a member mounted at the outlet of the heating chamber;
Figure 13 is a schematic longitudinal section through an end portion of a hot roller of the laminator of Fig. 5;
Figure 14 is a perspective view of an outer bearing shell supporting the roller of Fig. 13;

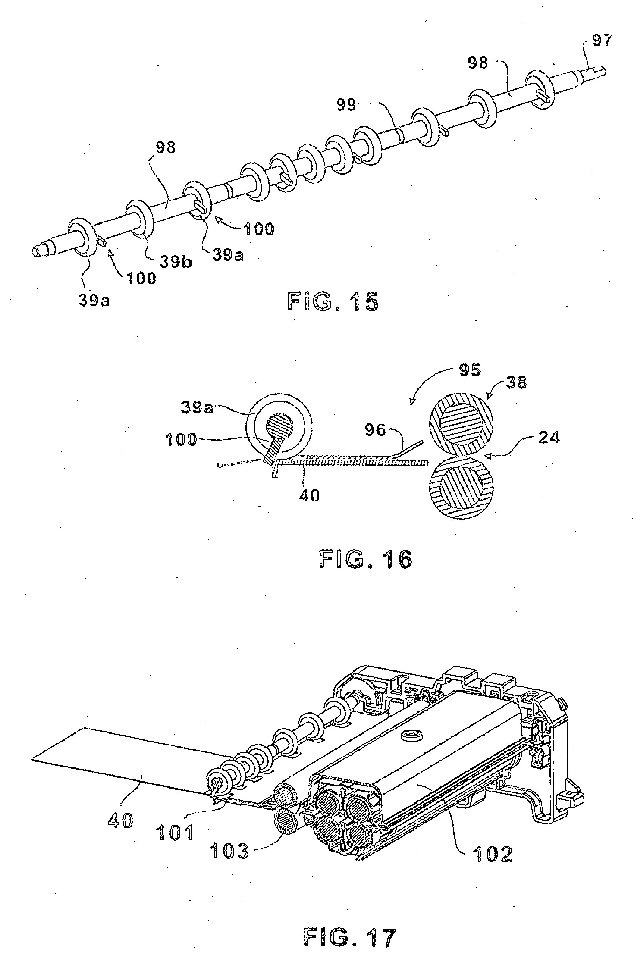

Figure 15 is a perspective view of an ejection roller of the laminator of Fig. 5;
Figure 16 is a schematic cross-sectional view of a pressing station near the outlet of the laminator of Fig. 5, and
Figure 17 is a partially cut-away view of component parts the laminator of Fig. 5.

### Description of the Preferred Embodiments

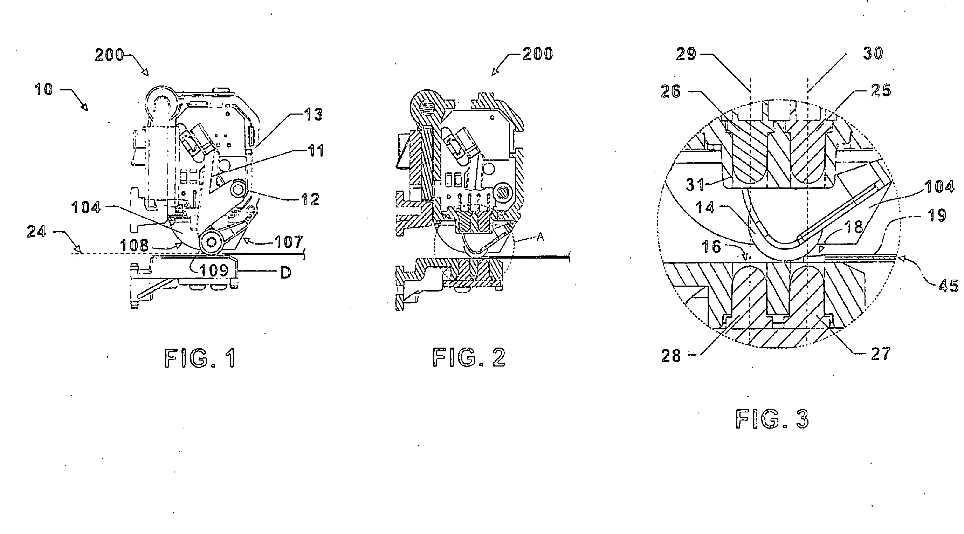

Referring to Figs 1 to 4 of the drawings, an inlet sensor 200 for a laminator comprises a pouch detector 10 having an arm 11 fixed by a pivot 12 to a housing 13. A pair of rollers 14 is mounted to the arm 11 and disposed below the housing 13 and a torsion spring 15 provides resilient means for urging the rollers 14 into abutment with a planar stop surface 16 of a part 17 which is mounted to the laminator below the housing 13. The pouch detector 10 includes a transducer for providing an actuation signal upon detection of the entry of a leading edge 18 of the pouch 19 between the rollers 14 and the stop surface 16, thereby angularly displacing the pivoting arm 11. The transducer in the preferred embodiment shown is a Hall effect transducer comprising a Hall element 20, mounted in a holder 21 on a printed circuit board 22 fixed in the housing 13. The Hall element 20 outputs an actuating signal or voltage signal that varies in response to changes in magnetic field caused by a permanent magnet 23 fixed to one end of the pivoting arm 11. The pouch-conveying path 24 extends between the rollers 14 and the surface 16, the inlet side being on the right side of the pouch detector as seen in Figs 1 to 3. Displacement of the arm 11 (not shown) therefore provides an actuating signal indicating the presence of a pouch 19 and, as described further below, since this actuating signal is proportional to the displacement of the roller 14 from the stop surface 16 it may be used to continuously control the speed of the machine according to this displacement.

The inlet sensor 200 also incorporates first and second infra red LEDs or emitters 25 and 26 and first and second phototransistors or receivers 27 and 28. The emitter and receiver of each pair are generally coaxially aligned on opposing sides of the pouch-conveying path 24, the second emitter/receiver pair 26/28 located downstream of the first pair 25/27 their common axes 29, 30 lying in a plane aligned parallel to the pouch-conveying path 24 and spaced transversely from the rollers 14 and arm 11. The emitters 25, 26 are mounted to the circuit board 22, their lenses projecting through respective openings in a light guide 31, while the receivers 27, 28 are mounted to a PCB 32 secured to the part 17.

The first emitter/receiver pair 25/27 is positioned such that an optical path between them, which is generally aligned with the axis 30, passes through the leading edge 18 of the pouch 19. The receiver operates in an active mode generating a response signal proportional to the light it receives below the saturation level and in this manner the first emitter/receiver pair 25/27 and circuit board 22 provide an optical transmissivity measuring apparatus.

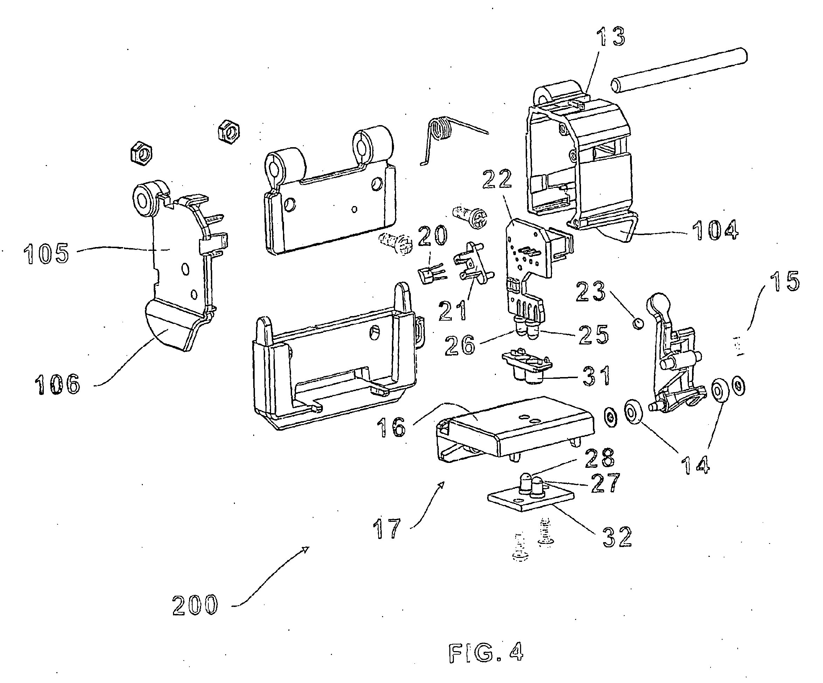

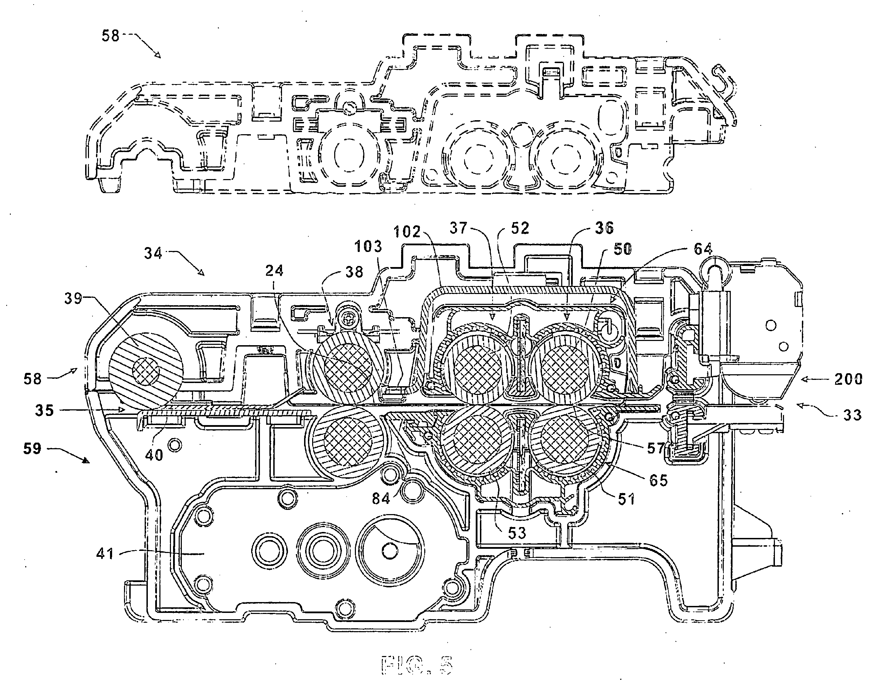

As seen in Figs 1 and 4, the housing 13 includes a flange 104 and a closure 105 which engages the housing 13 has a flange 106 of like shape to flange 104. The flanges 104, 106 are elongated in the pouch-feeding direction 24, being generally parallel and depend downwardly from the housing, with the lower port of the pivoting arm 11 and the rollers 14 disposed between the flanges 104, 106. The aligned edges of the flanges 104, 106 include a forward part 107 extending forward of the rollers 14 smoothly joined to a rearward part 108 extending rearward of the rollers 14. The edge parts 107, 108 both taper toward a throat 109 defined between the edge parts 107, 108 and the surface 16, the throat 109 having a narrowest dimension adjacent the rollers 14 to limit the thickness of material which may be fed into the laminator, and thus limits the angular deflection of the pivoting arm 11. The rearward edge part 108 has a smooth convex curvature, while the forward edge part 107 is tapered linearly, these edge parts thereby serving to guide a pouch entered manually in to the laminator and one which may be expelled by the pouch feeding device. Fig. 5 shows the position of the inlet sensor 200 at the inlet 33 to the laminator 34. The pouch-conveying path 24 extending from the inlet 33 to the outlet 35 between two pairs of hot rollers 36, 37, a pair of traction rollers 38 and between ejection rollers 39 and an anvil 40 which together provide pouch feeding device. The hot rollers 36, 37, traction rollers 38 and ejection rollers 39 are connected by a transmission (not shown) through which they are simultaneously rotated by a reversible electric drive motor 41.

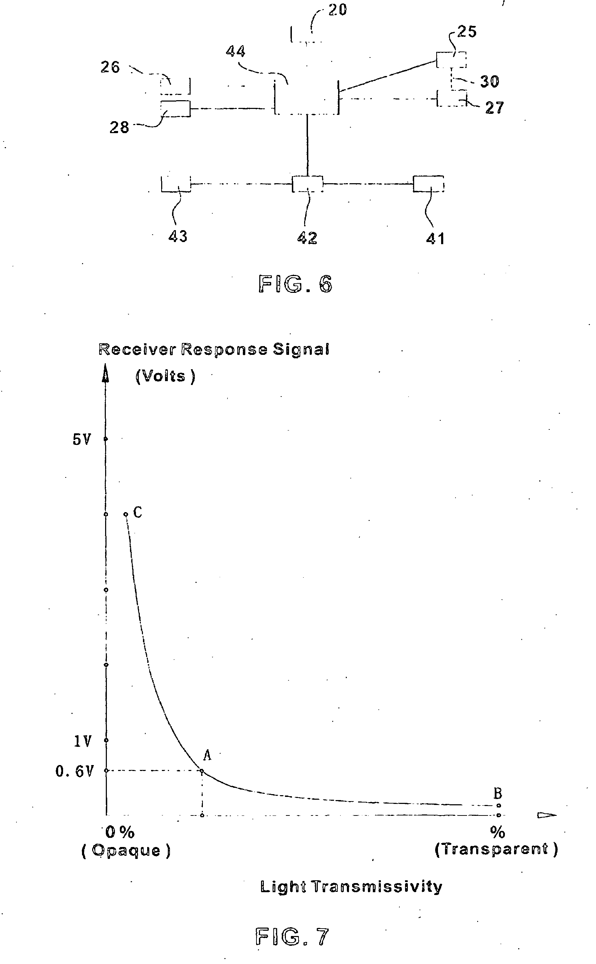

As seen in Fig. 6 the drive motor 41 is connected via a drive circuit 42 to a power supply 43. A control circuit 44 controls the drive circuit 42 and is connected to the output from the Hall element 20 and the first and second emitter/receiver pairs 25/27, 26/28. This schematic of the circuit is of course highly simplified, omitting compensation circuits and other elements for simplicity.

The control circuit 44 operates the light emitter 25 to transmit a beam along an optical path passing through the leading edge 18, and it also receives an actuation signal from the Hall element 20 of the pouch detector 10 upon detection of the entry of the leading edge into the inlet so as to displace the arm 11. Upon receiving the response signal from the light receiver, the control circuit 44 then performs a comparison between the response signal and a predetermined figure representing an optical transmissivity.

In a specific example, the variation of the response signal with light transmissivity of the translucent material placed between the emitter and receiver 25, 27 is shown in Fig. 7. If the response signal has a voltage of 0.6V or less this is indicative of the leading edge having a high optical transmissivity, whereas a voltage of more than 0.6V is indicative of the leading edge having a low optical transmissivity.

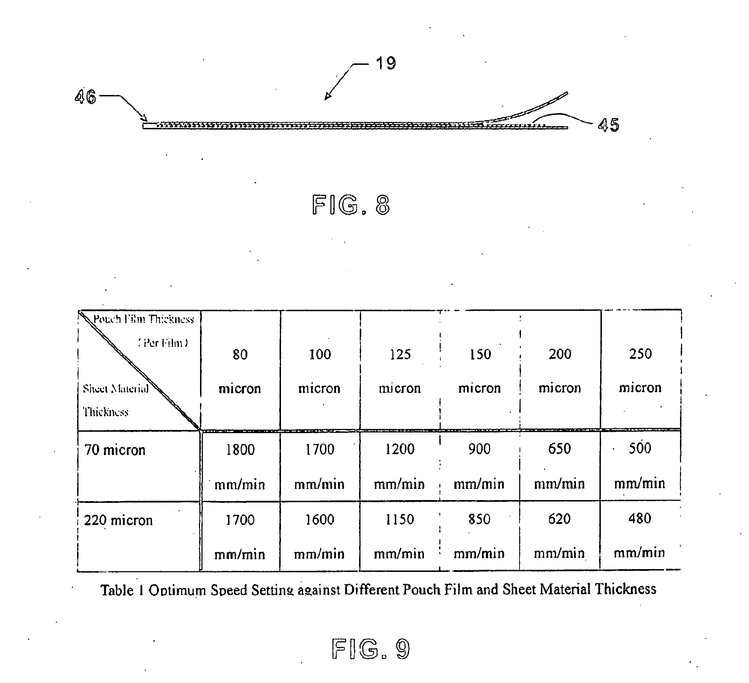

A thermal lamination pouch 19 enclosing a document 45 is shown in Fig. 8 and includes two films of polymer joined together by a heat seal along the edge 46 having a width of approximately 2 millimetres. This edge 46, following proper curing, has a high light transmissivity whereas due to the opposing inner sides of the films being covered in a thin adhesive resin coating the three other edges of the pouch each have a relatively lower light transmissivity.

By discriminating between a high and low optical transmissivity of the leading edge in the above-described manner, the laminator is controlled in a manner to prevent inadvertent insertion of the pouch in an incorrect orientation. Generally, with a pouch in which the sheets are bonded by a single heat seal along one edge there are three incorrect orientations, corresponding to the three open edges of the pouch. If the comparing step performed by the control circuit 44 indicates a high optical transmissivity of the leading edge entered into the sensor then the control circuit 44 operates the drive circuit 42 to drive the motor 42 forward to feed the pouch toward the outlet. Otherwise, if the comparing step indicates a low optical transmissivity of the leading edge then the control circuit 44 operates the drive circuit 42 to drive the motor 42 backward to return the pouch toward the inlet. At the same time the controller operates a flashing lamp (not shown) and an audible alarm (not shown) to warn the user of the fault and prompt the user to insert the pouch correctly.

Once the correct orientation of the pouch has been determined the control circuit 44 operates the drive circuit 42 to drive the motor 42 at a controlled speed. The two pairs of hot rollers 36, 37 are heated by thermostatically controlled elements 60, 61 to maintain a substantially constant temperature, therefore controlling the speed at which the pouch is fed thorough the rollers controls the heat applied to the pouch for lamination. In addition to the thickness of the pair of films comprising the pouch, compensation should be made for the thickness of the enclosed sheet material, since more heat is "lost" to this sheet material as the thickness of the sheet material increases. Therefore, the speed of the motor 42 is controlled in proportion to both the thickness of the pair of films and to the instantaneous thickness of the pouch (including the enclosed sheet material) as measured by the pouch detector 10.

To measure the thickness of the films both the first emitter/receiver pair 25/27 and the second emitter/receiver pair 26/28 of the optical transmissivity measuring apparatus are used to determine when the sealed edge 46 is properly positioned with respect to the rollers 14, i.e. with the centre of the rollers 14 above the sealed edge 46, in which position the output signal from the pouch detector 10 is proportional to the thickness of the pair of films. When the actuation signal is received, the control circuit 44 operates both the first emitter 25 and the second emitter 26 and monitors the output from the first receiver 27 and the second receiver 28. The instantaneous output signal from the pouch detector 10 is recorded when a variation in the signal from the first receiver 27 occurs - specifically a rise in the output voltage, indicating a reduction in light transmissivity due to the leading edge of the sheet material 45 entering between the first emitter/receiver pair 25/27. In this position the leading edge of the sheet material 45 has not entered under the rollers 14, while the sealed edge 46 is properly positioned to determine the film thickness. If no such variation in the signal from the first receiver 27 occurs before there is a variation in the output from the second receiver 28, specifically a rise in output voltage above a threshold level, then the film thickness measurement is made upon this rise in output voltage signal from the second receiver 28. This second scenario is indicative of a reduction in light received by the receiver 28, due to "shading" by the edge 46 and this will occur if the spacing between the sealed edge 46 and the leading edge of the sheet material 45 is sufficiently large. When this rise or positioning signal occurs a measurement of the thickness of the pouch is likewise taken from the pouch detector, via the actuation signal from the Hall element 20 since, in the absence of the sheet material 45 as determined from the output of the first receiver 27, only the two films rest under the rollers 14.

In a software routine performed by the control circuit 44 a look-up table is encoded, and a starting speed is determined from this table corresponding to the measured thickness of the two films. Fig. 9 shows a table wherein, for example, a film thickness of 150 micron (corresponding to a pair of films having a combined 300 micron thickness) gives a starting speed of 900 mm/min as shown in the first row of the table based upon the pouch holding a light (70 micron) sheet of paper. The control circuit 44 then controls the motor 42 to advance the laminate at this starting speed while continuously monitoring the thickness of the pouch. With any increase in the instantaneous thickness of the pouch the speed is reduced from the starting speed proportionally. In the example given with reference to Fig. 8, if the instantaneous thickness of the laminate is determined to be 520 micron (corresponding to sheet material within the pouch being 220 micron thick as per the second row of the table) the throughput speed is reduced to 850 mm/min. Optionally the speed may be varied in smaller steps than those tabulated, to more closely approximate a continuous variation of speed with the thickness of the pouch.

Advantageously, the inlet sensor and control circuit 44 cooperate to provide an alarm and to prevent the entry of a pouch or laminate having a thickness exceeding the capacity of the machine, generally in a known manner. If the leading edge of the sheet material 45 is excessively spaced apart from the sealed edge 46 of the pouch the leading edge of the laminate is not supported by the sheet material and when the pouch is softened during heating, this leading edge can tend to curl over, possibly jamming the machine. The inlet sensor and control circuit 44 can also cooperate generally in a known manner to provide an alarm and to prevent the entry of a pouch or laminate with an excessive leading margin.

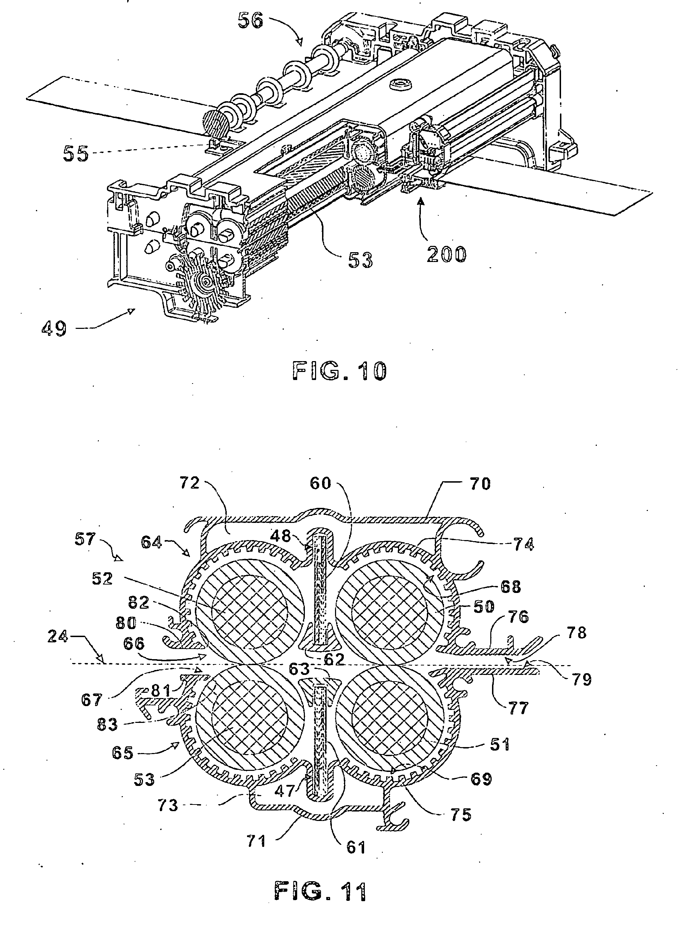

Referring to Fig. 10, a monitoring arrangement is provided to avoid a jam or to mitigate the effects of a jam by checking the timely progress of the leading edge of the pouch along the pouch-conveying path 24. The hot roller pair 36 includes first and second rollers 50, 51 and the hot roller pair 37 includes first and second rollers 52, 53. A rotary encoder 49 includes a sensor wheel rotationally fast with the roller 53 and provides a counting pulse signal during synchronous rotation of the rollers 50-53 used to impel the laminate through machine.

When the leading edge enter the first pouch 10 detector at the inlet the control circuit receives the actuation signal and starts recording the number of counting pulses from the rotary encoder 49. The user further inserts the pouch between the rollers of the first pair 36 and thus the pouch is pinched between them and drawn along the pouch-conveying path 24. Provided the leading edge of the path follows the pouch-conveying path 24 and there is no slipping of the pouch relative to the rollers 36-39 a known angular displacement of the rollers, as measured by the rotary encoder 49, will transport the leading edge 18 to the outlet of the laminator. A second pouch detector 55 is located at the outlet of the laminator adjacent an ejection roller assembly 56. The second pouch detector 55 preferably comprises a micro-switch operated by contact with the leading edge of the pouch, or it may alternatively comprise a photodetector. The control circuit 44 monitors the output of the second pouch detector 55 while the motor 42 is driven forward to drive the pouch toward the outlet. If the leading edge of the pouch is not detected before the accumulated number of counting pulses reaches a pre-determined number, then the control circuit 44 reverses the motor, returning the pouch to the inlet and indicating an abnormal condition to the user. Otherwise, in the absence of this abnormal condition, the control circuit 44 continues to drive the motor to eject the pouch. In this manner potential damage to the laminate and laminator due to a jam may be avoided.

As shown in Figs 5 and 11, the pouch-conveying path 24 passes centrally through a heating chamber 57 that encloses the hot rollers 50-53. For ready maintenance the rollers 50 and 52 on the upper side of the pouch-conveying path 24 are mounted to a first upper sub-assembly 58 (shown in dashed outline in Fig. 5) which is releasably fastened to a second lower sub-assembly 59, as by screw fasteners. A first heating element 60 is mounted to the first sub-assembly 58 between the first rollers 50 and 52 and a second heating element 61 is mounted to the second sub-assembly 59 between the second rollers 51 and 53. The heating elements 60, 61 have a planar rectangular form elongated parallel to the rollers 50-53. An innermost elongate edge of each heating element 60, 61 is received in a recess in a respective rail 62, 63. An opposing outermost elongate edge of each heating element 60, 61 is received in a recess 48, 47 in a respective shield 64, 65. The shields and rails are mounted to respective ones of the upper and lower sub-assemblies 58, 59. Compared to laminators employing only a single pair of hot rollers, the hot rollers 50-53 are able to operate at a lower temperature, while maintaining the same throughput speed. Advantageously this increased pouch rigidity and reduces the likelihood of jamming.

The shields 64, 65 are elongated parallel to the rollers 50-53 and each is integrally extruded from aluminium for heat-conductivity. The rails 62, 63 are separate aluminium extrusions. The elements 60, 61 therefore not only provide radiant heat for the rollers 50-53 but are also in thermal contact with the rails and shields 64, 65. The shields 64, 65 substantially surround both first rollers 50, 52 and both second rollers 51, 53 respectively, each having a respective mouth 66, 67. The inner periphery of the rollers 50-53 project from the mouths 66, 67 which oppose one another either side of the pouch-conveying path 24. The shields have arcuate inner wall portions 74, 75 which are substantially concentric with the central axis of the rollers 50-53 and which have concave inner sides 68, 69 facing the adjacent rollers 50-53. The concave inner sides 68, 69 include a plurality of axially aligned parallel ribs for increasing the surface area. Each shield 64, 65 also includes a respective integral outer wall 70, 71 joined to the inner walls 74, 75 to define respective axially elongated air gaps 72, 73. Each of the air gaps 72, 73 extends generally about the recesses 47, 48 and the immediately adjacent parts of the inner walls 74, 75.

Each shield 64, 65 has a respective elongate inlet flange portion 76, 77 at an upstream side thereof, each having an inner side 78, 79 disposed adjacent the pouch-conveying path 24 and defining a narrow neck inlet opening between the inner sides 78, 79. Each inner side 78, 79 is corrugated, the inlet flange portions 76, 77 of the shields providing a degree of pre-heating of the pouch. Each shield 64, 65 has a respective outlet flange portion 80, 81 at a downstream side thereof, each outlet flange portion 80, 81 having a tapered edge 82, 83 for separating from the first and second rollers adjacent the downstream side of the heating chamber any laminate which may become at least partially bonded thereto.

Shown in Fig. 5 extending over the outer side of the upper shield 64 between the inlet and outlet flange portions 76, 80 is a cover 102 of a thermally insulating polymer. A flange 103 at an edge of the cover 102 adjacent the outlet flange portion 80, 81 at the outlet to heating chamber 57 includes a plurality of longitudinally spaced slots forming a comb shape, with tine portions elongated parallel to the pouch-conveying path 24. This comb-shaped edge flange 103 guides the pouch, while allowing airflow therethrough for cooling. In cooperation with the shields this cover provides insulation of the heating chamber 57.

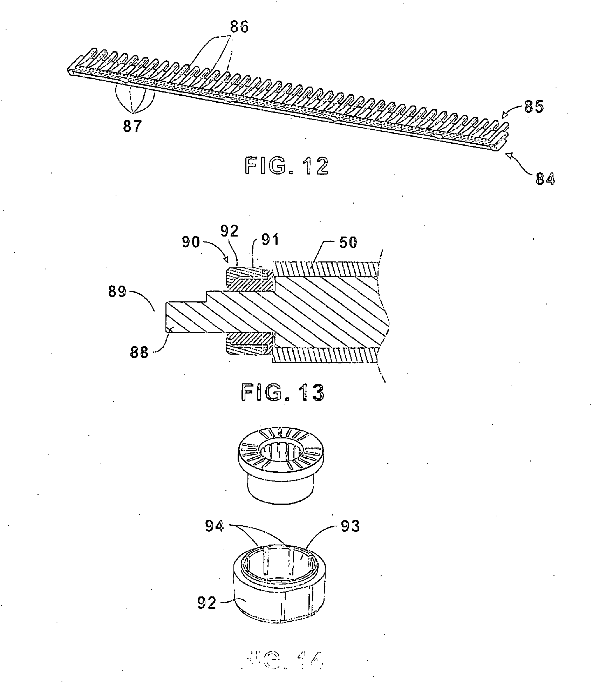

As best seen with reference to Figs 5 and 12, extending parallel to the edge flange 83 below the pouch-conveying path 24 at the outlet to heating chamber 57 is a member 84. The member 84 is received in a concavity formed in the lower shield 65 adjacent the outlet and includes a plurality of longitudinally spaced slots 86 in its outer edge 85 forming a comb shape opposing the comb-shaped edge flange 83. A plurality of upwardly-opening concavities 87 in the member 84 are spaced apart longitudinally and disposed proximate the shield 65. These concavities 87 are provide for receiving any excess adhesive expelled from the pouch.

Referring to Figs 13 and 14, each of the hot rollers 50-53 includes a roller shaft 88 supported for rotation about its longitudinal axis 89 by journal assemblies 90 mounted to the frame (not shown) of the sub-assemblies 58, 59. Each journal assembly 90 includes inner and outer plain bearing shells 91, 92 of heat-stabilised lubricated nylon, the outer bearing shells 92 fixed in apertures (not shown) in the frame and the inner shells 91 being fixed rotationally fast with the shaft 88. The cylindrical bearing surface 93 of the outer shell 92 engages a complementary surface of the inner shell. A plurality of axially elongated grooves 94 are provided in the bearing surface 93 and hold a lubricant (not shown).

Adjacent the outlet 35 is a pressing station 95 comprising pressure plate 96 urged downward toward the anvil 40 by its weight. The traction roller pair 38 is driven to feed the pouch into the pressing station 95 between the pressure plate 96 and anvil 40 and the ejection rollers 39 are driven to eject the pouch from the laminator.

The ejection rollers 39 are formed from a resilient silicone rubber and are of like diameter. The ejection rollers 39 include rollers 39a and 39b connected to form groups 98, 99 which are rotationally fast with a driven shaft 97. The pouch is pinched between the periphery of the rollers 39a, 39b and the anvil 40 and each ejection roller 39a includes an integral finger 100 which projects outwardly from the periphery in its ordinary relaxed position, as shown. Being flexible and resilient the finger may be deflected by the pouch into a retracted position (not shown) in which it lies substantially within the periphery of the ejection roller 39. To ensure that the fingers 100 are not deflected except in the presence of a pouch, the anvil 40 includes a recess 101 adjacent each roller 39a for receiving the finger 100, allowing the finger to pass through the anvil 40 in its extended position. The fingers 100 and are supported upon the driven shaft at longitudinally spaced positions with the fingers linearly aligned with one another parallel to a longitudinal axis of the driven shaft so as to substantially simultaneously engage the pouch and assist in ejecting the pouch from the laminator.

Aspects of the present invention have been described by way of example only and it should be appreciated that modifications and additions may be made thereto without departing from the scope thereof.

## Claims

1. A laminator comprising:
a pouch feeding device (36, 37, 38, 39, 40) for moving a substantially flat lamination pouch (19) along a pouch-conveying path from an inlet (33) toward an outlet (34), the pouch having a leading edge (18);
an optical transmissivity measuring apparatus comprising a light emitter (25) and a light receiver (27) providing a response signal proportional to the amount of light received from the light emitter through the pouch-conveying path at the inlet; and
a control circuit (44) for discriminating between a high and low optical transmissivity of the leading edge (18) according to the response signal of the light receiver, **characterized in that** the control circuit is operable to actuate the pouch feeding device to feed the pouch toward the outlet conditionally upon a high optical transmissivity of the leading edge and to stop the pouch feeding device or to actuate the pouch feeding device to return the pouch toward the inlet conditionally upon a low optical transmissivity of the leading edge.

2. The laminator of claim 1 further comprising a pouch detector (10) disposed at the inlet, the pouch detector providing an actuation signal upon detection of the entry of a leading edge (18) of the pouch into the inlet.

3. The laminator of claim 2 wherein the pouch detector comprises a contact-type sensor (11, 12, 13, 14, 15, 16, 17) actuated by engagement with the pouch when the pouch is inserted into the inlet.

4. The laminator of claim 2 or claim 3 wherein the pouch detector comprises a pivoting arm (11), a roller (14) mounted to the arm, resilient means (15) for urging the roller into abutment with a stop surface (16) and a transducer (20) for providing the actuation signal, such that the actuating signal is proportional to the displacement of the roller from the stop surface.

5. The laminator of claim 4 wherein the pouch detector comprises a housing (13) and an adjacent abutment part (17) between which the pouch is fed, the pivoting arm being mounted in the housing, the transducer comprising a Hall transducer (20) and a magnet (23) is mounted to the pivoting arm proximate the Hall transducer, the housing further including a portion cooperating with the abutment part to define a throat of fixed dimension through which the pouch is fed, the throat tapering in the pouch-feeding direction to either side of the rollers.

6. The laminator of any one of claims 1 to 5 wherein the laminator further comprises an alarm operated by the control circuit conditionally upon a low optical transmissivity of the leading edge.

7. The laminator of any one of claims 2 to 5 wherein:
the pouch feeding device includes at least one pair of rollers (36, 37, 38) for moving the substantially flat lamination pouch along the pouch-conveying path from an inlet toward an outlet,
the pouch feeding device further including drive means (41) for reversibly rotating the at least one pair of rollers;
a second pouch detector (55) disposed at a second position spaced along the pouch-conveying path from the inlet, the pouch detector disposed at the inlet and the second pouch detector providing respective actuation signals upon detection of a leading edge of the pouch at the inlet and second positions respectively;
a rotary encoder (49) providing a displacement signal indicative of the angular displacement of the rollers;
the control circuit operating the drive means to move a pouch toward the outlet, the control circuit starting a counter incremented by the displacement signal upon receipt of an actuation signal from the pouch detector disposed at the inlet, the control circuit monitoring the counter and reversing the drive means to return the pouch toward the inlet if the actuation signal from the second pouch detector is not received before the counter reaches a predetermined level.

8. A method of operating a laminator having a pouch feeding device (36, 37, 38, 39, 40) for moving a substantially flat lamination pouch (19) along a pouch-conveying path from an inlet (33) toward an outlet (34), a pouch detector (10) disposed at the inlet for detection of the entry of a leading edge (18) of the pouch into the inlet; an optical transmissivity measuring apparatus comprising a light emitter (25) and a light receiver (27) disposed proximate the inlet; and a control circuit (44) controlling the pouch feeding device in response to output from the pouch detector (10) and the optical transmissivity measuring apparatus, the method comprising:
receiving an actuation signal from the pouch detector (10) upon detection of the entry of a leading edge (18) the pouch into the inlet;
conditionally upon receipt of the actuation signal, operating the light emitter (25) to transmit a beam along an optical path passing through the leading edge of the pouch;
receiving, from the light receiver (27), a response signal proportional to the amount of light received from the light emitter (25) along the optical path, and
comparing the response signal to a predetermined optical transmissivity figure to discriminate between a high and low optical transmissivity of the leading edge (18) either:
if the comparing step indicates a high optical transmissivity of the leading edge then actuating the pouch feeding device to feed the pouch toward the outlet, or
if the comparing step indicates a low optical transmissivity of the leading edge then stopping the pouch feeding device or to actuating the pouch feeding device to return the pouch toward the inlet.

9. A method according to claim 8, wherein the pouch (19) comprises a pair of films enclosing a sheet material:
wherein a positioning signal from the optical transmissivity measuring apparatus indicates the proper positioning of a leading edge (18) of the pouch
relative to the pouch detector;
the method comprising the further steps of:
operating the pouch detector, in response to receipt of the positioning signal, to measure the thickness of the pair of films;
determining a first pouch feeding speed corresponding to the thickness of the pair of films;
operating the pouch feeding device (36, 37, 38, 39, 40) to draw the pouch through the laminator at the first pouch feeding speed;
receiving a signal from the pouch detector (10) proportional the instantaneous pouch thickness, and
varying the speed of the pouch feeding device from the first pouch feeding speed in proportion the instantaneous pouch thickness.

## Patentansprüche

1. Laminiermaschine, die aufweist:
eine Beutelzuführvorrichtung (36, 37, 38, 39, 40) für das Bewegen eines im Wesentlichen flachen Laminierbeutels (19) längs eines Beuteltransportweges von einem Eintritt (33) zu einem Austritt (34), wobei der Beutel eine Vorderkante (18) aufweist;
eine Messvorrichtung für die optische Durchlässigkeit, die eine Lichtemissionseinrichtung (25) und eine Lichtempfangseinrichtung (27) aufweist, wobei ein Ansprechsignal proportional der Lichtmenge bereitgestellt wird, die von der Lichtemissionseinrichtung über den Beuteltransportweg am Eintritt empfangen wird; und
eine Steuerschaltung (44) für das Unterscheiden zwischen einer hohen und niedrigen optischen Durchlässigkeit der Vorderkante (18) entsprechend dem Ansprechsignal der Lichtempfangseinrichtung, **dadurch gekennzeichnet, dass** die Steuerschaltung funktionsfähig ist, um die Beutelzuführvorrichtung zu betätigen, um den Beutel in Richtung des Austritts zuzuführen, bedingt durch eine hohe optische Durchlässigkeit der Vorderkante, und um die Beutelzuführvorrichtung abzuschalten, oder um die Beutelzuführvorrichtung zu betätigen, um den Beutel in Richtung des Eintritts zurückzuführen, bedingt durch eine niedrige optische Durchlässigkeit der Vorderkante.

2. Laminiermaschine nach Anspruch 1, die außerdem einen Beuteldetektor (10) aufweist, der im Eintritt angeordnet ist, wobei der Beuteldetektor ein Betätigungssignal beim Nachweisen des Eintritts einer Vorderkante (18) des Beutels in den Eintritt liefert.

3. Laminiermaschine nach Anspruch 2, bei der der Beuteldetektor einen Kontaktsensor (11, 12, 13, 14, 15, 16, 17) aufweist, der durch einen Eingriff mit dem Beutel betätigt wird, wenn der Beutel in den Eintritt eingesetzt wird.

4. Laminiermaschine nach Anspruch 2 oder Anspruch 3, bei der der Beuteldetektor aufweist: einen schwenkbaren Arm (11); eine am Arm montierte Rolle (14); ein elastisches Mittel (15) dafür, dass die Rolle getrieben wird, um an eine Anschlagfläche (16) anzustoßen; und einen Wandler (20) für das Liefern des Betätigungssignals, so dass das Betätigungssignal der Verschiebung der Rolle von der Anschlagfläche proportional ist.

5. Laminiermaschine nach Anspruch 4, bei der der Beuteldetektor ein Gehäuse (13) und ein benachbartes Anschlagteil (17) aufweist, zwischen denen der Beutel zugeführt wird, wobei der schwenkbare Arm im Gehäuse montiert ist, wobei der Wandler einen Hall-Wandler (20) aufweist, und wobei ein Magnet (23) am schwenkbaren Arm in unmittelbarer Nähe des Hall-Wandlers montiert ist, wobei das Gehäuse außerdem einen Abschnitt umfasst, der mit dem Anschlagteil zusammenwirkt, um eine Verengung von unveränderlicher Abmessung zu definieren, durch die der Beutel zugeführt wird, wobei sich die Verengung in der Beutelzuführrichtung nach beiden Seiten der Rollen verjüngt.

6. Laminiermaschine nach einem der Ansprüche 1 bis 5, wobei die Laminiermaschine außerdem einen Alarm aufweist, der durch die Steuerschaltung betätigt wird, bedingt durch eine niedrige optische Durchlässigkeit der Vorderkante.

7. Laminiermaschine nach einem der Ansprüche 2 bis 5, bei der:
die Beutelzuführvorrichtung mindestens ein Paar Rollen (36, 37, 38) für das Bewegen des im Wesentlichen flachen Laminierbeutels längs des Beuteltransportweges von einem Eintritts in Richtung eines Austritts umfasst;
die Bentelzuführvorrichtung außerdem ein Antriebsmittel (41) für das umkehrbare Drehen des mindestens einen Paares von Rollen umfasst;
ein zweiter Beuteldetektor (55) in einer zweiten Position beabstandet längs des Beuteltransportweges vom Eintritt angeordnet ist, wobei der Beuteldetektor, der im Eintritt angeordnet ist, und der zweite Beuteldetektor jeweilige Betätigungssignale beim Nachweisen einer Vorderkante des Beutels jeweils im Eintritt und in den zweiten Positionen liefern;
ein Drehgeber (49) ein Verschiebungssignal liefert, das die Winkelverschiebung der Rollen anzeigt;
die Steuerschaltung das Antriebsmittel betätigt, um einen Beutel in Richtung des Austritts zu bewegen, wobei die Steuerschaltung einen Zähler startet, der durch das Verschiebungssignal beim Empfang eines Betätigungssignals vom im Eintritt angeordneten Beuteldetektor fortgeschaltet wird, wobei die Steuerschaltung den Zähler überwacht und das Antriebsmittel umkehrt, um den Beutel in Richtung des Eintritts zurückzuführen, wenn das Betätigungssignal vom zweiten Beuteldetektor nicht empfangen wird, bevor der Zähler ein vorgegebenes Niveau erreicht.

8. Verfahren zum Betätigen einer Laminiermaschine, die aufweist: eine Beutelzuführvorrichtung (36, 37, 38, 39, 40) für das Bewegen eines m Wesentlichen flachen Laminierbeutels längs eines Beuteltransportweges von einem Eintritt (33) zu einem Austritt (34); einen Beuteldetektor (10), der im Eintritt für das Nachweisen des Eintritts einer Vorderkante (18) des Beutels in den Eintritt angeordnet ist; eine Messvorrichtung für die optische Durchlässigkeit, die eine Lichtemissionseinrichtung (25) und eine Lichtempfangseinrichtung (27) aufweist, angeordnet in unmittelbarer Nähe des Eintritts; und eine Steuerschaltung (44) für das Steuern der Beutelzuführvorrichtung als Reaktion auf eine Ausgabe vom Beuteldetektor (10) und der Messvorrichtung für die optische Durchlässigkeit, wobei das Verfahren die folgenden Schritte aufweist:
Empfangen eines Betätigungssignals vom Beuteldetektor (10) beim Nachweisen des Eintritts einer Vorderkante (18) des Beutels in den Eintritt;
Betätigen der Lichtemissionseinrichtung (25), bedingt durch den Empfang des Betätigungssignals, um einen Strahl längs eines optischen Weges zu leiten, der durch die Vorderkante des Beutels gelangt;
Empfangen eines Ansprechsignals von der Lichtempfangseinrichtung (27) proportional der Lichtmenge, die von der Lichtemissionseinrichtung (25) längs des optischen Weges empfangen wird; und
Vergleichen des Ansprechsignals mit einer vorgegebenen optischen Durchlässigkeitszahl, um zwischen einer hohen und einer niedrigen optischen Durchlässigkeit der Vorderkante (18) zu unterscheiden; und entweder,
wenn der Schritt des Vergleichens eine hohe optische Durchlässigkeit der Vorderkante zeigt, Betätigen der Beutelzuführvorrichtung, um den Beutel in Richtung des Austritts zuzuführen;
oder,
wenn der Schritt des Vergleichens eine niedrige optische Durchlässigkeit der Vorderkante zeigt, Abschalten der Beutelzuführvorrichtung oder Betätigen der Beutelzuführvorrichtung, um den Beutel in Richtung des Eintritts zurückzuführen.

9. Verfahren nach Anspruch 8, bei dem der Beutel (19) ein Paar Folien aufweist, die ein flächenartiges Material einschließen,
wobei ein Positionierungssignal von der Messvorrichtung für die optische Durchlässigkeit die richtige Positionierung einer Vorderkante (18) des Beutels relativ zum Beuteldetektor anzeigt;
wobei das Verfahren die folgenden weiteren Schritte aufweist:
Betätigen des Beuteldetektors als Reaktion auf den Empfang des Positionierungssignals, um die Dicke des Paares der Folien zu messen;
Ermitteln einer ersten Beutelzuführgeschwindigkeit entsprechend der Dicke des Paares der Folien;
Betätigen der Beutelzuführvorrichtung (36, 37, 38, 39, 40), um den Beutel durch die Laminiennaschine mit der ersten Beutelzuführgeschwindigkeit zu ziehen;
Empfangen eines Signals vom Beuteldetektor (10) proportional zur momentanen Beuteldicke; und
Verändern der Geschwindigkeit der Beutelzuführvorrichtung von der ersten Beutelzuführgeschwindigkeit im Verhältnis zur momentanen Beuteldicke.

## Revendications

1. Machine à plastifier, comprenant :
un dispositif d'alimentation de pochettes (36, 37, 38, 39, 40) pour déplacer une pochette stratifiée pratiquement plate (19) le long d'un trajet de transfert des pochettes, d'une entrée (33) vers une sortie (34), la pochette comportant un bord d'attaque (18) ;
un dispositif de mesure de la capacité de transmission optique, comprenant un émetteur de lumière (25) et un récepteur de lumière (27), fournissant un signal de réponse proportionnel à la quantité de lumière reçue de l'émetteur de lumière à travers le trajet de transfert des pochettes au niveau de l'entrée ; et
un circuit de commande (44) pour faire la discrimination entre une capacité de transmission optique élevée et basse du bord d'attaque (18), en fonction du signal de réponse du récepteur de lumière, **caractérisé en ce que** le circuit de commande sert à actionner le dispositif d'alimentation des pochettes pour amener la pochette vers la sortie, en présence d'une capacité de transmission optique élevée du bord d'attaque, et à arrêter le dispositif d'alimentation des pochettes ou à actionner le dispositif d'alimentation des pochettes afin de ramener la pochette vers l'entrée, en présence d'une capacité de transmission optique basse du bord d'attaque.

2. Machine à plastifier selon la revendication 1, comprenant en outre un détecteur de pochettes (10) agencé au niveau de l'entrée, le détecteur de pochettes fournissant un signal d'actionnement lors de la détection de l'entrée d'un bord d'attaque (18) de la pochette dans l'entrée.

3. Machine à plastifier selon la revendication 2, dans laquelle le détecteur de pochettes comprend un capteur du type à contact (11, 12, 13, 14, 15, 16, 17) actionné par suite de l'engagement dans la pochette lorsque la pochette est insérée dans l'entrée.

4. Machine à plastifier selon les revendications 2 ou 3, dans laquelle le détecteur de pochettes comprend un bras pivotant (11), un rouleau (14) monté sur le bras, un moyen élastique (15) pour pousser le rouleau de sorte qu'il bute contre une surface d'arrêt (16), et un transducteur (20) pour fournir le signal d'actionnement, le signal d'actionnement étant ainsi proportionnel au déplacement du rouleau à partir de la surface d'arrêt.

5. Machine à plastifier selon la revendication 4, dans laquelle le détecteur de pochettes comprend un boîtier (13) et une partie de butée adjacente (17), entre lesquels la pochette est amenée, le bras pivotant étant monté dans le boîtier, le transducteur comprenant un transducteur à effet Hall (20), un aimant (23) étant monté sur le bras pivotant près du transducteur à effet Hall, le boîtier englobant en outre une partie coopérant avec la partie de butée pour définir une gorge à dimensions fixes, à travers laquelle la pochette est amenée, la gorge étant effilée dans la direction d'amenée des pochettes de chaque côté des rouleaux.

6. Machine à plastifier selon l'une quelconque des revendications 1 à 5, dans laquelle la machine à plastifier comprend en outre une alarme actionnée par le circuit de commande en présence d'une capacité de transmission optique basse du bord d'attaque.

7. Machine à plastifier selon l'une quelconque des revendications 2 à 5, dans laquelle :
le dispositif d'alimentation des pochettes englobe au moins une paire de rouleaux (36, 37, 38) pour déplacer la pochette stratifiée pratiquement plate le long du trajet de transfert des pochettes, d'une entrée vers une sortie ;
le dispositif d'alimentation des pochettes englobe en outre un moyen d'entraînement (41) pour faire tourner de manière réversible la au moins une paire de rouleaux ;
un deuxième détecteur de pochettes (55), agencé au niveau d'une deuxième position espacée de l'entrée le long du trajet de transfert des pochettes, le détecteur de pochettes étant agencé au niveau de l'entrée et le deuxième détecteur de pochettes fournissant des signaux d'actionnement respectifs lors de la détection d'un bord d'attaque de la pochette, respectivement au niveau de l'entrée et des deuxièmes positions ;
un codeur rotatif (49), fournissant un signal de déplacement indicatif du déplacement angulaire des rouleaux ;
le circuit de commande actionnant le moyen d'entraînement pour déplacer une pochette vers la sortie, le circuit de commande démarrant un compteur incrémenté par le signal de déplacement lors de la réception d'un signal d'actionnement transmis par le détecteur de pochettes agencé au niveau de l'entrée, le circuit de commande surveillant le compteur et inversant le moyen d'entraînement afin de ramener la pochette vers l'entrée lorsque le signal d'actionnement transmis par le deuxième détecteur de pochettes n'est pas reçu avant l'atteinte d'un niveau prédéterminé par le compteur.

8. Procédé d'actionnement d'une machine à plastifier, comportant un dispositif d'alimentation de pochettes (36, 37, 38, 39, 40) pour déplacer une pochette stratifiée pratiquement plate (19) le long d'un trajet de transfert des pochettes, d'une entrée (33) vers une sortie (34), un détecteur de pochettes (10), agencé au niveau de l'entrée, pour détecter l'entrée d'un bord d'attaque (18) de la pochette dans l'entrée ; un dispositif de mesure de la capacité de transmission otique, comprenant un émetteur de lumière (25) et un récepteur de lumière (27) agencés près de l'entrée ; et un circuit de commande (44) pour contrôler le dispositif d'alimentation de pochettes en réponse au signal de sortie du détecteur de pochettes (10) et de l'appareil de mesure de la capacité de transmission optique, le procédé comprenant les étapes ci-dessous :
réception d'un signal d'actionnement du détecteur de pochettes (10) lors de la détection de l'entrée d'un bord d'attaque (18) de la pochette dans l'entrée ;
lors de la réception du signal d'actionnement, actionnement de l'émetteur de lumière (25) pour transmettre un faisceau le long d'un trajet optique passant à travers le bord d'attaque de la pochette ;
réception, par le récepteur de lumière (27), d'un signal de réponse proportionnel à la quantité de lumière reçue de l'émetteur de lumière (25) le long du trajet optique ; et
comparaison du signal de réponse à un chiffre prédéterminé de la capacité de transmission otique pour faire la discrimination entre une capacité de transmission optique élevée et basse du bord d'attaque (18) ; et soit
lorsque l'étape de comparaison indique une capacité de transmission optique élevée du bord d'attaque, actionnement du dispositif d'alimentation des pochettes pour amener la pochette vers la sortie ; soit
lorsque l'étape de comparaison indique une capacité de transmission optique basse du bord d'attaque, arrêt du dispositif d'alimentation des pochettes ou actionnement du dispositif d'alimentation des pochettes pour ramener la pochette vers l'entrée.

9. Procédé selon la revendication 8, dans lequel la pochette (19) comprend une paire de films renfermant un matériau de feuille ;
un signal de positionnement transmis par le dispositif de mesure de la transmission optique indiquant le positionnement approprié du bord d'attaque (18) de la pochette par rapport au détecteur de pochettes ;
le procédé comprenant les étapes additionnelles ci-dessous :
actionnement du détecteur de pochettes en réponse à la réception du signal de positionnement, pour mesurer l'épaisseur de la paire de films ;
détermination d'une première vitesse d'alimentation des pochettes, correspondant à l'épaisseur de la paire de films ;
actionnement du dispositif d'alimentation des pochettes (36, 37, 38, 39, 40) pour entraîner la pochette à travers la machine à plastifier à la première vitesse d'alimentation des pochettes ;
réception d'un signal transmis par le détecteur de pochettes (10), proportionnel à l'épaisseur instantanée des pochettes ; et
changement de la vitesse du dispositif d'alimentation des pochettes, à partir de la première vitesse d'alimentation des pochettes, de manière proportionnelle à l'épaisseur instantanée des pochettes.
